(19) Europäisches Patentamt / European Patent Office / Office européen des brevets

(11) **EP 4 687 367 A1**

(12) **EUROPEAN PATENT APPLICATION**

(43) Date of publication:
04.02.2026 Bulletin 2026/06

(21) Application number: 25191722.5

(22) Date of filing: 25.07.2025

(51) International Patent Classification (IPC):
*H04W 72/0453* (2023.01)

(52) Cooperative Patent Classification (CPC):
H04W 72/0453

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 01.08.2024 FI 20245943

(71) Applicant: Nokia Solutions and Networks Oy
02610 Espoo (FI)

(72) Inventors:
• LIU, Bryan
 Massy (FR)
• KELA, Kalle Petteri
 Kaarina (FI)
• VALCARCE RIAL, Alvaro
 Massy (FR)
• JAIN, Akshay
 Helsinki (FI)

(74) Representative: Nokia EPO representatives
Nokia Technologies Oy
Karakaari 7
02610 Espoo (FI)

(54) **POLICY-BASED SCHEDULING OF WIRELESS RESOURCES**

(57)     The present subject matter relates to a method for performing for a time unit a scheduling operation comprising: receiving (301) a time domain scheduling decision for the time unit, the time domain scheduling decision indicating a set of devices of the wireless communication system; determining (303) a feature vector descriptive of the set of devices and an available set of frequency resource units of the wireless communication system; inputting (305) the feature vector to a policy-based reinforcement learning agent for receiving an output, the output comprising a distribution between the set of devices and the set of frequency resource units; and using (307) the distribution to determine a frequency domain scheduling decision.

Fig. 5

EP 4 687 367 A1

**Description**

**TECHNICAL FIELD**

Various example embodiments relate to telecommunication systems, and more particularly to an apparatus for scheduling resources in a wireless communication system.

**BACKGROUND**

Sixth-generation wireless networks (6G) represent the next frontier in wireless communication, featuring new radio systems and network architecture designed to deliver unprecedented data rates, ultra-low latency, and advanced use cases. This innovation is expected to drive the ongoing growth of wireless devices and radio resources in mobile networks. Conventional schedulers typically make scheduling decisions based on heuristic metrics like the Proportional Fairness (PF) metric, which allocates radio resources to user equipment (UE) based on a ratio between predicted and average throughputs. However, optimizing resource allocation may be essential for maximizing network performance.

**SUMMARY**

Example embodiments provide an apparatus (referred to as first apparatus) for a wireless communication system, the first apparatus comprising at least one processor; and at least one memory storing instructions that, when executed by the at least one processor, cause the first apparatus to perform for a time unit a scheduling operation that comprises: receive a time domain scheduling decision for the time unit, the time domain scheduling decision indicating a set of devices of the wireless communication system; determine a feature vector descriptive of the set of devices and an available set of frequency resource units of the wireless communication system; input the feature vector to a policy-based reinforcement learning agent for receiving an output, the output comprising a distribution between the set of devices and the set of frequency resource units; and use the distribution to determine a frequency domain scheduling decision.

Example embodiments provide a method (referred to as first method) for performing for a time unit a scheduling operation comprising: receiving a time domain scheduling decision for the time unit, the time domain scheduling decision indicating a set of devices of a wireless communication system; determining a feature vector descriptive of the set of devices and an available set of frequency resource units of the wireless communication system; inputting the feature vector to a policy-based reinforcement learning agent for receiving an output, the output comprising a distribution between the set of devices and the set of frequency resource units; and using the distribution to determine a frequency domain scheduling decision.

Example embodiments provide a computer program product comprising processor executable instructions for causing an apparatus for performing at least the first method.

Example embodiments provide a non-transitory computer readable medium comprising program instructions that, when executed by an apparatus, cause the apparatus to perform at least the first method.

Example embodiments provide an apparatus (referred to as second apparatus) for training a policy-based reinforcement learning agent with an environment defined by a wireless communication system, the second apparatus comprising at least one processor; and at least one memory storing instructions that, when executed by the at least one processor, cause the second apparatus to perform a scheduling operation per training time unit of a plurality of training time units that comprises: receive a time domain scheduling decision for the training time unit, the time domain scheduling decision indicating a set of devices; determine a feature vector descriptive of the set of devices and an available set of frequency resource units of the wireless communication system; input the feature vector to the policy-based reinforcement learning agent for receiving an output, the output comprising a distribution between the set of devices and the set of frequency resource units; use the distribution to determine a frequency domain scheduling decision; and check a convergence criterion by at least: use a combination of one or more rewards to determine whether the convergence criterion is fulfilled, the combination comprising a current reward associated with the determined frequency domain scheduling decision; in response to determining that the convergence criterion is fulfilled provide the policy-based reinforcement learning agent as a trained policy-based reinforcement learning agent; otherwise, adapt learnable parameters of the policy-based reinforcement learning agent, resulting in an adapted policy-based reinforcement learning agent and performing the scheduling operation for a next training time unit using the adapted policy-based reinforcement learning agent.

Example embodiments provide a training method for training a policy-based reinforcement learning agent with an environment defined by a wireless communication system, the training method comprising performing a scheduling operation per training time unit of a plurality of training time units comprising: receiving a time domain scheduling decision for the training time unit, the time domain scheduling decision indicating a set of devices; determining a feature vector descriptive of the set of devices and an available set of frequency resource units of the wireless communication system;

inputting the feature vector to the policy-based reinforcement learning agent for receiving an output, the output comprising a distribution between the set of devices and the set of frequency resource units; using the distribution to determine a frequency domain scheduling decision; and checking a convergence criterion comprising: using a combination of one or more rewards to determine whether the convergence criterion is fulfilled, the combination comprising a current reward associated with the determined frequency domain scheduling decision; in response to determining that the convergence criterion is fulfilled providing the trained policy-based reinforcement learning agent; otherwise, adapting learnable parameters of the policy-based reinforcement learning agent, resulting in an adapted policy-based reinforcement learning agent and performing the scheduling operation for a next training time unit using the adapted policy-based reinforcement learning agent.

Example embodiments provide a computer program product comprising processor executable instructions for causing an apparatus for performing at least the training method.

Example embodiments provide a non-transitory computer readable medium comprising program instructions that, when executed by an apparatus, cause the apparatus to perform at least the training method.

## BRIEF DESCRIPTION OF THE DRAWINGS

The accompanying figures are included to provide a further understanding of examples, and are incorporated in and constitute part of this specification. In the figures:

FIG. 1 is a block diagram illustrating an example radio access network in accordance with an example of the present subject matter;

FIG. 2 is a block diagram illustrating an apparatus in accordance with an example of the present subject matter;

FIG. 3 is a process flowchart illustrating a method for determining a frequency domain scheduling decision according to an example of the present subject matter;

FIG. 4 is a process flowchart illustrating a method for determining a frequency domain scheduling decision according to an example of the present subject matter;

FIG. 5 is a block diagram illustrating an apparatus configured to perform a method for determining a frequency domain scheduling decision for a set of devices in accordance with an example of the present subject matter;

FIG. 6 is a diagram illustrating an apparatus configured to perform a method for determining a frequency domain scheduling decision for a set of devices in a multi-user Multiple Input Multiple Output (MU-MIMO) configuration in accordance with an example of the present subject matter;

FIG. 7 is a diagram illustrating an apparatus configured to perform a method for determining a frequency domain scheduling decision for a set of devices in a MU-MIMO configuration in accordance with an example of the present subject matter;

FIG. 8 is a process flowchart illustrating a method for training a policy-based reinforcement learning agent with an environment defined by a wireless communication system in accordance with an example of the present subject matter;

FIG. 9 is a diagram illustrating an apparatus for training a policy-based reinforcement learning agent with an environment defined by a wireless communication system in accordance with an example of the present subject matter;

FIG. 10 is a diagram illustrating an example policy-based reinforcement learning agent for training the policy-based reinforcement learning agent in accordance with an example of the present subject matter; and

FIG. 11 is a block diagram illustrating an example apparatus according to the present subject matter.

## DETAILED DESCRIPTION

In the following description, for purposes of explanation and not limitation, specific details are set forth such as particular architectures, interfaces, techniques, etc., in order to provide a thorough understanding of the examples.

However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may determine frequency domain scheduling decisions without iterating over individual frequency resource units. Indeed, the policy-based reinforcement learning agent may output decisions for the entire set of available frequency resource units simultaneously. This approach may allow concurrent processing of frequency resource units, enhancing throughput and reducing latency through parallel data handling. Additionally, it may improve spectral efficiency by maximizing resource utilization and lower processing overhead by minimizing complexity and power consumption. Supported by advanced reinforcement learning technologies, the present subject matter may allow real-time optimization and offer greater flexibility and scalability to accommodate the growing number of users and devices in future networks. The present subject matter may thus support diverse use cases, from high-throughput applications to low-latency communications, ensuring a seamless and efficient user experience. These advantages may contribute to more efficient, reliable, and high-performance 6G wireless communication systems.

"First," "Second," etc. as used herein, these terms are used as labels for nouns that they precede, and do not imply any type of ordering (e.g., spatial, temporal, logical) unless explicitly defined as such.

The wireless communication system comprises nodes such as base stations, wherein each node may serve devices located within the node's geographical area of service. The wireless communication system may support one or more radio access technologies (RATs). The one or more RATs may, for example, be at least one of the following: evolved universal terrestrial radio access (E-UTRA), 5G new radio (NR), or a 6G-based system, but is not limited thereto, and a person skilled in the art may apply the present subject matter to wireless communication systems supporting one or more other RATs provided with necessary properties. The device may refer to an equipment that connects to and communicates with the wireless communication system to access services and applications provided by the wireless communication system. The device may, for example, be a user equipment (UE). The device may, for example, comprise any one of: a mobile phone, a tablet, an Internet of things (IoT) device, or a laptop.

The first apparatus may be configured to perform the scheduling operation for the time unit in order to allocate frequency resources that may be used for transmission of data during the time unit. The time unit may be a time interval used for scheduling and resource allocation. For example, the wireless communication system may define frames that are predefined in terms of their duration and structure, operating in a continuous and cyclic manner, repeating every *n* milliseconds. Each frame may consist of time units, with the scheduling operation performed for the upcoming time unit in which communication will occur. For example, the time unit may be a Transmission Time Interval (TTI) or any other time interval supported by the radio access technology of the wireless communication system. The time unit for which the scheduling operation is performed may be allocated for uplink or downlink transmissions.

In one example, the first apparatus may include both a time domain scheduler and a frequency domain scheduler. The time domain scheduler makes the time domain scheduling decision, which is then received by the first apparatus at the frequency domain scheduler. Alternatively, the time domain scheduling decision may be made by another, remote apparatus and then communicated to the first apparatus. Using one compound scheduler can reduce the complexity of coordinating between different schedulers, leading to simpler implementation and maintenance. On the other hand, having separate schedulers may allow each to specialize in optimizing their respective dimensions, which may result in better performance in each domain.

Upon receiving the time domain scheduling decision, the first apparatus may determine the available set of frequency resource units during the time unit. The frequency resource unit may represent a unit of frequency allocation. The frequency resource unit may, for example, be a resource block (RB), a resource block group (RBG) or any other frequency resource unit supported by the radio access technology of the wireless communication system. The set of frequency resource units may belong to one frequency band or belong to multiple frequency bands. Within one frequency band, channel conditions may be more consistent, simplifying the implementation of transmission techniques such as Multiple Input Multiple Output (MIMO) technique. Utilizing multiple frequency bands may increase the total available spectrum, enhancing overall network capacity and throughput and enabling implementation of transmission techniques such as carrier aggregation technique.

Once the set of frequency resource units and the set of devices are provided, the feature vector may be determined. The feature vector is descriptive of the set of devices and descriptive of the set of frequency resource units. The feature vector may comprise elements, each element comprising a value of a respective feature. That is, the feature vector comprises values of features, wherein those features are descriptive of the set of devices and descriptive of the set of frequency resource units. The feature vector may be provided in a format for the policy-based reinforcement learning agent to process it.

The policy-based reinforcement learning agent may be a machine learning (ML) model that has been trained in accordance with reinforcement learning (RL). The policy-based reinforcement learning agent is trained to receive a vector descriptive of devices and frequency resource units and to provide a distribution between the devices and the frequency resource units. The training in accordance with the reinforcement learning may be performed using a policy gradient algorithm. The policy-based reinforcement learning agent has been trained to learn a policy that maps states to action. The state may, for example, be represented by the feature vector and the action may be represented by the distribution between the set of devices and the set of frequency resource units.

The distribution may indicate how each frequency resource unit of the set of frequency resource units may be allocated across the set of devices. The first apparatus may be configured to use the distribution to determine a frequency domain scheduling decision for at least part of the set of devices. The at least part of the set of devices may be referred to as scheduled devices. For the time unit under consideration, the scheduled devices may only include a subset of the set of devices, with the remaining unscheduled devices potentially being scheduled in the next time unit. Alternatively, the scheduled devices may be the set of devices.

The scheduling operation for the time unit may thus result in each device of the scheduled devices being assigned one or more frequency resource units of the set of frequency resource units. The one or more frequency resource units assigned to each device of the scheduled devices may be used for transmitting data to or from the device. If the time unit is designated for uplink transmission, the scheduled devices may transmit data to the apparatus simultaneously within the time unit using the respective assigned frequency resource units. Conversely, if the time unit is designated for downlink transmission, the apparatus may transmit data to the set of devices simultaneously within the time unit using the respective assigned frequency resource units. The simultaneous transmission of data may be performed in the context of MIMO techniques, carrier aggregation techniques or any other transmission technique requiring simultaneous transmission of data to or from devices.

According to one example, the policy-based reinforcement learning agent is a stochastic policy-based reinforcement learning agent. The distribution comprises a probability distribution per frequency resource unit of the set of frequency resource units. The probability distribution of each frequency resource unit of the set of frequency resource units indicates probabilities of assignment of the frequency resource unit to the set of devices. The first apparatus is configured to determine the frequency domain scheduling decision by at least: sampling the probability distributions for obtaining allocations indicating assignments of the set of frequency resource units to devices of the set of devices.

For example, the probability distribution of each frequency resource unit of the set of frequency resource units may comprise a probability of assignment of the each frequency resource unit to each device of the set of devices. E.g., if the number of the set of devices is M, the probability distribution of each frequency resource unit of the set of frequency resource units may comprise M probabilities of assignment of the each frequency resource unit to the set of devices respectively. Each probability distribution may be sampled to select one device of the set of devices.

Using the stochastic policy-based reinforcement learning agent may provide robustness to noise and uncertainty, as it can better handle stochastic environments where actions may not always lead to the same results. Additionally, stochastic policies may be well-suited for dense action spaces, facilitating smoother and more stable policy updates through gradient-based optimization techniques.

The present subject matter may enable resource allocation per time unit to enable data transmission using a specific transmission technique or a combination of multiple techniques. Thus, the scheduled devices within a time unit may operate according to either a single transmission technique or a combination of multiple techniques. In the case of multiple techniques, the scheduled devices may comprise subsets, each subset operating with a distinct transmission technique. These transmission techniques may include carrier aggregation (CA), MIMO, single-user MIMO (SU-MIMO), multi-user MIMO (MU-MIMO), or any other technique that allows simultaneous transmission to or from devices by an apparatus.

In the case of a MIMO-based technique, each device of at least part of the set of devices may be assigned a rank indicating the number of independent spatial data streams that can be simultaneously transmitted to or received from the device by the first apparatus. The assigned rank may be dependent on the MIMO-based transmission technique being used. The rank may be referred to as the user layer. Thus, each device of the at least part of the set of devices is associated with a user layer, enabling efficient and flexible resource allocation. Depending on whether a combination of transmission techniques is used, the at least part of the set of devices may consist of the entire set of devices or a subset of it. For example, if a single transmission technique such as SU-MIMO or MU-MIMO is used for performing the scheduling operation, the assignment may result in a set of user layers associated with the set of devices respectively.

According to one example, the first apparatus is configured to perform the scheduling operation in accordance with a SU-MIMO technique, wherein the frequency domain scheduling decision is determined independently of the user layer assigned to each device of the set of devices. The user layer represents a rank which is assigned to the device.

With the SU-MIMO technique, individual data streams are transmitted to or from each scheduled device simultaneously. Each data stream represents a separate MIMO layer. The scheduling operation for the time unit may result in each device of the scheduled devices being assigned one or more frequency resource units of the set of frequency resource units. The one or more frequency resource units assigned to each device of the scheduled devices may be used for transmitting each data stream of the data streams destined to or coming from the device.

According to one example (referred to as MIMO sequential scheduling example), the first apparatus is configured to perform the scheduling operation in accordance with a SU-MIMO or MU-MIMO technique. The first apparatus is configured to determine a frequency domain scheduling decision per distinct user layer of the set of user layers by at least repeating per distinct user layer the determining of the feature vector, the inputting of the feature vector and the determining of the frequency domain scheduling decision, resulting in a frequency domain scheduling decision per distinct user layer.

Indeed, with the MIMO sequential scheduling example, for each distinct user layer X of the set of user layers, the feature vector may individually be determined for the user layer X. The individually determined feature vector may be input to the policy-based reinforcement learning agent in order to obtain an output that may be used to determine the frequency domain scheduling decision for the user layer X.

According to one example (referred to as MU-MIMO parallel scheduling example), the first apparatus is configured to perform the scheduling operation in accordance with the MU-MIMO technique. The feature vector is determined such that the distribution comprises one individual distribution per distinct user layer of the set of user layers. The individual distribution is between the set of devices and the set of frequency resource units. The frequency domain scheduling decision comprises one individual frequency domain scheduling decision per distinct user layer.

For example, the feature vector may be provided such that the distribution that is provided per user layer may be used to allocate resources for devices that have been assigned that user layer.

The set of devices may, for example, be served by the first apparatus, the first apparatus being a base station of the wireless communication system. According to one example, the scheduling operation for the time unit may be for scheduling resources for data transmission (uplink transmission) by the set of devices or for data transmission (downlink transmission) by the first apparatus.

According to one example, the frequency domain scheduling decision is determined so that to each scheduled device of the set of devices contiguous frequency resource units are assigned for uplink transmissions. By keeping resource blocks contiguous, the first apparatus may minimize interference with other devices. Indeed, when the resources are contiguous, the channel characteristics tend to be more stable across those resources, which can improve the accuracy of channel estimation and lead to better overall performance.

The uplink and downlink scheduling may follow contiguous and non-contiguous allocations respectively. The contiguous allocation may, for example, follow a manner from the top to the bottom, to guarantee that a contiguous uplink allocation is achieved. For example, the set of frequency resource units may be indexed. The first apparatus may be configured to loop over the set of frequency resource units from the top index to the bottom index and assigns the frequency resource unit to the device only when the contiguous criterion still holds. The non-contiguous allocation may include allocating the decisions that are sampled without determining whether the contiguous criterion is satisfied.

According to one example, the policy-based reinforcement learning agent comprises a neural network. The neural network comprises an output layer whose dimension is equal to the number of frequency resource units multiplied by the number of the set of devices plus one.

The output layer of the neural network is set to a size equal to $N_{RBG} \times (N_{CS2} + 1)$ so that the neural network is called only once to schedule the set of frequency resource units in the time unit, where $N_{RBG}$ is the number of the set of frequency resource units, and $N_{CS2}$ is the number of the set of devices. The additional 1 indicates that a null space may be needed to allocate no users to a frequency resource unit. This may, for example, mean that the resource allocation for the frequency resource unit is skipped.

According to one example, the first apparatus is configured to map the output layer into a two-dimensional matrix whose columns represent the set of devices and rows represent the set of frequency resource units. The sampling may be performed column-wise using the matrix.

This example may enable a systematic method for determining frequency scheduling decisions in a time-efficient manner. This may particularly be advantageous given the stringent delay requirements at the physical layer for radio frequency (RF) signal transmission in 6G.

According to one example, the feature vector comprises values of features. The features comprise for each device of the set of devices a device related feature. The features further comprise per device and per frequency resource unit a channel related feature. The device related feature comprises at least one of: a buffer status of the device or a past throughput of the device. The channel related feature of a device and a frequency resource unit comprises at least: a channel quality indicator (CQI) of a frequency channel to the device which is defined by the frequency resource unit.

For example, the device related feature may comprise the normalized past throughput ($l_j$) of the $j$-th device which may be given by $$l_j = \frac{l'_j}{l_{max}}$$, where $l_{max}$ is a stored maximum filtered throughput and $l'_j$ is the filtered throughput of the $j$-th device. Additionally, or alternatively, the device related feature may comprise the normalized buffer status ($b_j$) of the $j$-th device which may be defined as: $$b_j = \frac{q_{max} - q_j}{q_{max}}$$, where $q_{max}$ denotes the maximum packet size queued in the buffer of the $j$-th device and $q_j$ refers to the total packet size (physical data unit) queued in the buffer of the $j$-th device.

The channel related feature may, for example, comprise a normalized CQI value ($o_{i,j}$) of the $j$-th device and the $i$-th available frequency resource unit: $o_{i,j} = \frac{10\log(o\prime_{i,j})}{35}$, where $o'_{i,j}$ denotes the reported CQI value for downlink scheduling or estimated channel quality for uplink scheduling.

According to one example, the features further comprise per device of the set of devices a correlation feature in case the scheduling operation is performed for a MU-MIMO technique. The correlation feature of the device comprises, for the MIMO sequential scheduling example, at least one of: a correlation (user correlation) between the device and other devices of the set of devices, or a sum of ranks from the device to each frequency resource unit to the set of frequency resource units. The correlation feature of the device comprises, for the MU-MIMO parallel scheduling example, a correlation between the device and other devices of the set of devices.

The sum of ranks may, for example, be a normalized sum of ranks ($k_{i,j,\zeta}$) from the *j*-th device to the *i*-th available frequency resource unit. The normalized sum of ranks $k_{i,j,\zeta}$ may be defined as follows: $k_{i,j,\zeta} = \frac{k'_{i,\zeta} + z_j}{k_{\max}}$, where $k'_{i,\zeta}$ may be the current sum of ranks from all the devices that have been allocated to the *i*-th frequency resource unit at the $\zeta$-th user layer, $z_j$ represents the rank of the *j*-th device and $k_{\max}$ denotes a preset value for the maximum possible sum of ranks. For the *i*-th frequency resource unit, the user correlation may comprise a correlation factor ($\varrho_{i,j}$) which represents a correlation between the *j*-th device and devices that are co-scheduled on the *i*-th frequency resource unit. The correlation factor $\varrho_{i,j}$ may be evaluated depending on the scheduling being uplink scheduling or downlink scheduling.

According to one example, the number of features ($N_{\text{feature}}$) of the feature vector is preset to a certain value according to a maximum number of devices and a maximum number of frequency resource units. The determining of the feature vector comprises applying zero-paddings in case the number of the set of devices and/or the number of the set of frequency resource units is smaller than the respective maximum number.

For example, the number of features may be preset to a certain value according to the maximum number of devices and possible resource block groups (RBGs), e.g., $N_{\text{feature}} = N_{CS2}(3N_{\text{RBG}} + 2)$. For the case when there are less available devices or RBGs at a TTI, zero-paddings are applied.

The feature vector may, for example, include channel conditions such as signal-to-noise ratio (SNR) and CQI values for each device of the set of devices. The feature vector may, for example, include user information including location, mobility, data rate requirements, and quality of service (QoS) needs for each device of the set of devices. The feature vector may, for example, include resource availability which covers the current allocation of time slots, frequency bands, and power levels. The feature vector may, for example, include traffic load reflecting the number of active devices, their traffic demands, and application types (e.g., voice, video, data). The feature vector may, for example, include interference levels from neighboring cells or other devices within a same cell. The feature vector may, for example, include historical data which comprises past performance metrics such as throughput, latency, and packet loss rates.

If the time unit is for downlink, the first apparatus may use resources determined by the frequency scheduling decision to simultaneously transmit data to the scheduled devices within that time unit. Conversely, if the time unit is for uplink, the scheduled devices may use resources allocated by the frequency scheduling decision to simultaneously transmit data to the first apparatus within the same time unit.

According to one example, the scheduling operation may be repeated for one or more further consecutive time units which are subsequent to the time unit.

The present subject matter may enable to obtain the policy-based reinforcement learning agent using the second apparatus and the training method. The second apparatus may be the first apparatus, meaning that the training and the inference of the policy-based reinforcement learning agent may be performed at the same apparatus. Alternatively, the second apparatus may not be the first apparatus. The first apparatus may be configured to access or receive the policy-based reinforcement learning agent from the second apparatus after the agent has been trained.

The policy-based reinforcement learning agent may be trained in accordance with the environment defined by the wireless communication system, states of the environment and actions. The environment may encompass the entire wireless communication system and its dynamics. The state may represent a status or condition of the wireless communication system. The state may encompass information that the agent may need to consider when scheduling resources. The state is represented by the feature vector. The action represents the frequency domain scheduling decision made by the policy-based reinforcement learning agent in response to the state.

The second apparatus may be configured to evaluate the reward (current reward) using the state associated with the current training time unit, the action made by the second apparatus and the state of the wireless communication system that resulted from the application of the current action. The reward may, for example, be defined as the change of geometric mean of user throughputs from the next training time unit to the current training time unit. The evaluated reward may be referred to as the reward provided by the environment. The combination of one or more rewards may comprise the current reward only. Alternatively, the combination of one or more rewards may comprise the current reward and one or more rewards which are evaluated by the second apparatus for respective one or more training time units that immediately precede the current training time unit. The combination may, for example, be the average of the one or more rewards or a weighted average of the one or more rewards. The convergence criterion may, for example, require that a difference between the combination of one or more rewards and reference reward is optimized (e.g., minimized). The reference reward may, for example, be a predefined reward. Alternatively, the reference reward may be provided by a critic network as in the following example.

According to one example, the policy-based reinforcement learning agent comprises an actor network and a critic network. The training is performed in accordance with an actor and critic configuration to train the actor network, wherein the provided trained policy-based reinforcement learning agent is the trained actor network. The critic network may be configured to provide an estimate of the value to the state and action pair.

For a current training time unit, the critic network evaluates the frequency domain scheduling decision (current action) made by the actor network. The critic network evaluates the frequency domain decision (current action) by estimating a value representing the expected return as future reward (reference reward) starting from the current state (defined by the feature vector determined for the current training time unit) and considering the current action. The loss function may be evaluated using the value provided by the critic network and the combination of one or more rewards provided by the environment in response to performing the current action.

According to one example, the training is performed to concurrently optimize the combination of one or more rewards and optimize a performance difference between the determined frequency domain scheduling decisions and corresponding reference scheduling decisions provided by an expert scheduler, wherein the convergence criterion requires an optimized combination of rewards and an optimized performance difference. The combination of one or more rewards may, for example, be a cumulative reward.

The performance difference may be the difference between the frequency domain scheduling decision made by the second apparatus for the current training time unit and the decision made by the expert scheduler for the current training time unit. Alternatively, the performance difference may be the difference between the frequency domain scheduling decisions made by the second apparatus for the current training time unit and one or more immediately preceding training time units and the decisions made by the expert scheduler for the current training time unit and the one or more preceding training time units.

The optimization of the performance difference may comprise the minimization of the performance difference. The performance difference may, for example, refer to the closeness of policies between the policy-based reinforcement learning agent and the expert scheduler. The optimization of the combination of one or more rewards may comprise the optimization (e.g., minimization) of the difference between the combination of one or more rewards and the reference reward.

For example, a loss function may be used for performing the optimization. The loss function may comprise the sum of a first term with a second term, wherein the first term may represent the difference between the combination of rewards and the reference reward and the second term may represent the performance difference. In each iteration, the loss function may be evaluated and checked against a convergence criterion.

According to one example, the optimization is performed by evaluating a loss function comprising a distance function that measures the performance difference.

The distance function is any one of: Jensen-Shannon divergence function, Kullback-Leibler divergence function or Wasserstein function.

According to one example, the second apparatus is configured to save the feature vector, the reward, and the scheduling decision from the expert scheduler into a fixed-sized buffer and check the convergence criterion once the buffer is full. In this case, the combination of one or more rewards may be the rewards evaluated while the buffer being filled. Also, the frequency domain decisions made while the buffer being filled may be compared against the respective decisions of the expert scheduler in order to evaluate the performance difference. After the checking of the convergence criterion, the buffer may be emptied.

According to one example, the policy-based reinforcement learning agent that is used in the inference phase is a deterministic policy-based reinforcement learning agent, wherein the distribution comprises a mapping between the set of frequency resource units and respective devices of the set of devices. The policy-based reinforcement learning agent is deterministic because the selection of the action may be deterministic in the inference phase, where an argmax() function may, for example, be applied.

According to one example, the training method may be performed in real time operation of the wireless communication system. The training time units may be the time units of the frames defined by the wireless communication system.

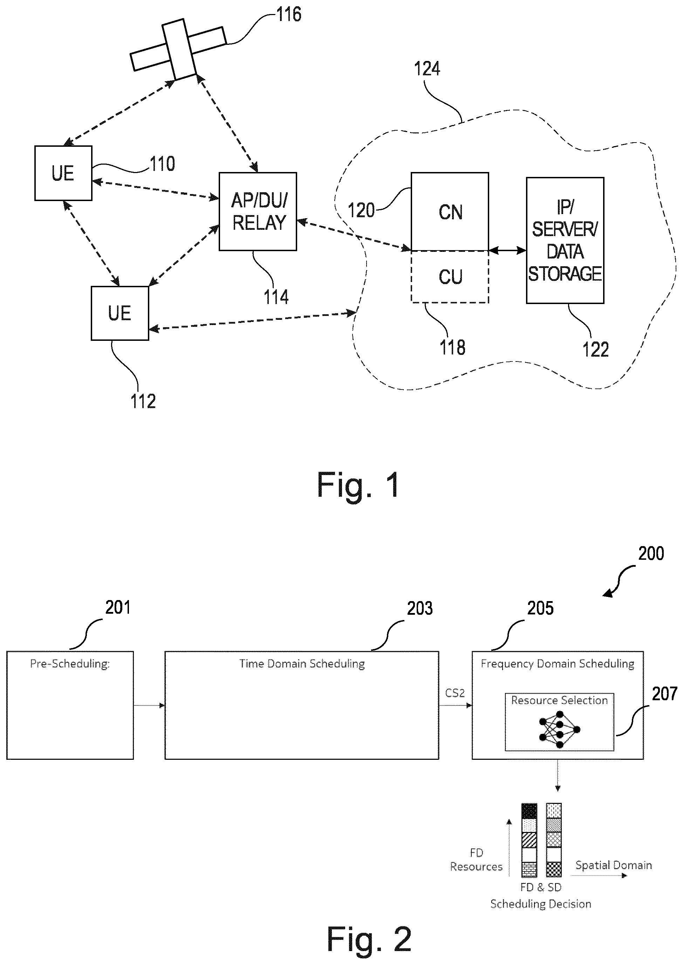

FIG. 1 is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g) NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in IoT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using MIMO antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, IoT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124). The communication system may also comprise a central control entity, or a like, providing facilities for networks of different operators to cooperate for example in spectrum sharing.

The technology of edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 114) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

FIG. 2 is a block diagram illustrating an apparatus 200 in accordance with an example of the present subject matter. The apparatus 200 may provide an example implementation of the first apparatus and the second apparatus. The apparatus 200 may be part of a wireless communication system as the one described with reference to FIG. 1. The apparatus 200 may, for example, be part of the node 114 of FIG. 1.

The apparatus 200 comprises a pre-scheduling unit 201, a time domain (TD) scheduling unit 203 and a frequency domain (FD) scheduling unit 205.

The pre-scheduling unit 201 may be configured for planning and allocating resources in advance before actual data transmission occurs. This may ensure that resources are available when needed and optimize the overall efficiency of the communication system. Pre-scheduling may be used in time and/or frequency domains.

The TD scheduling unit 203 may determine a time unit (e.g., TTI) and select a set of devices (CS2) for potential scheduling for the time unit. For example, the determined time unit may be a next time unit of multiple time units being used for scheduling. The selected set of devices may, for example, comprise devices having pending data for transmission.

The selected set of devices are provided to the FD scheduling unit 205, which allocates frequences resource units (e.g., RBs). The allocation may, for example, be performed for uplink transmission or downlink transmission. For that, the FD scheduling unit 205 may use a policy-based reinforcement learning agent 207 that is, for example, comprised in the FD scheduling unit in accordance with the present subject matter.

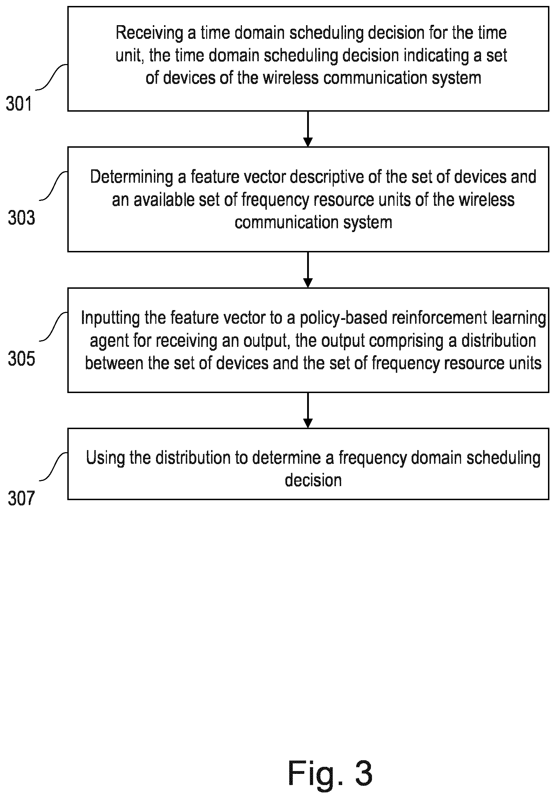

FIG. 3 is a process flowchart illustrating a method according to an example of the present subject matter. For the purpose of explanation, the method described in reference to FIG. 3 may be implemented in the apparatus illustrated and described in reference to FIG. 2 but is not limited to this implementation. The method may, for example, be performed by the FD scheduling unit 205. The method of FIG. 3 may be a scheduling operation for a given time unit.

The FD scheduling unit 205 may receive a time domain scheduling decision for the time unit at block 301. The time domain scheduling decision indicates a set of devices of the wireless communication system.

The FD scheduling unit 205 may determine a feature vector at block 303. The feature vector is descriptive of the set of devices and an available set of frequency resource units of the wireless communication system.

At block 305, the FD scheduling unit 205 may input the feature vector to a policy-based reinforcement learning agent. In response to the inputting of the feature vector, the FD scheduling unit 205 may receive an output from the policy-based reinforcement learning agent. The output comprises a distribution between the set of devices and the set of frequency resource units.

At block 307, the FD scheduling unit 205 may use the distribution to determine a frequency domain scheduling decision.

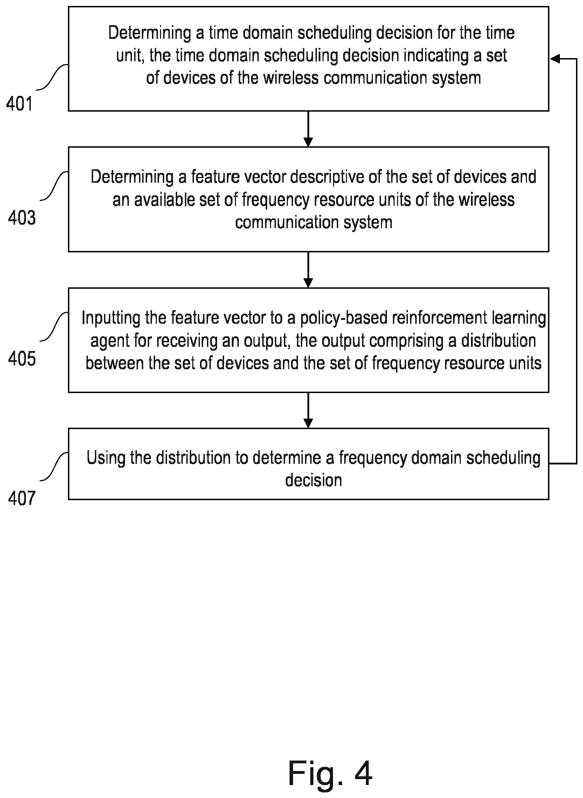

FIG. 4 is a process flowchart illustrating a method according to an example of the present subject matter. For the purpose of explanation, the method described in reference to FIG. 4 may be implemented in the apparatus illustrated and described in reference to FIG. 2 but is not limited to this implementation. The method may, for example, be performed by the FD scheduling unit 205.

For example, the wireless communication system may provide a sequence of radio frames. The radio frames may comprise time units. The method may dynamically schedule users and manage resources within these frames. The scheduling may change from one time unit to the next, allowing to adapt to varying traffic loads and channel conditions.

The FD scheduling unit 205 may determine a time domain scheduling decision for the coming time unit at block 401. The time domain scheduling decision indicates a set of devices of the wireless communication system.

The FD scheduling unit 205 may determine a feature vector at block 403. The feature vector is descriptive of the set of devices and an available set of frequency resource units of the wireless communication system.

The feature vector may be input, by the FD scheduling unit 205, in block 405 to a policy-based reinforcement learning agent. In response to the inputting of the feature vector, the FD scheduling unit 205 may receive an output from the policy-based reinforcement learning agent. The output comprises a distribution between the set of devices and the set of frequency resource units.

At block 407, the FD scheduling unit 205 may use the distribution to determine a frequency domain scheduling decision.

The scheduled devices may communicate within the time unit in accordance with the frequency scheduling decision. As shown by the arrow returning to block 401, the method may be repeated for the subsequent time unit.

In one example implementation of FIG. 4, block 401 may be performed by a TD scheduler, e.g., of the first apparatus. Blocks 403 to 407 may be performed by a FD scheduler of the first apparatus.

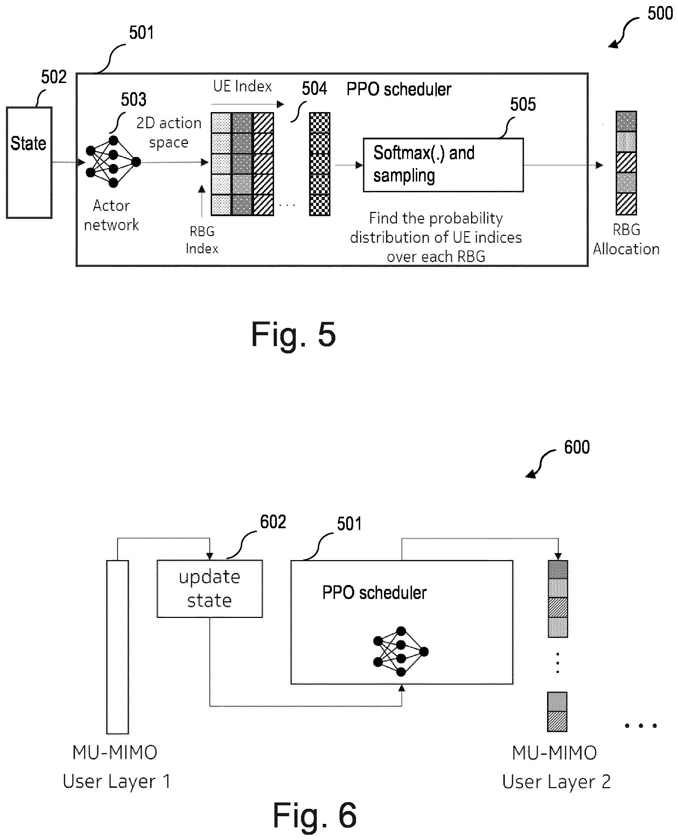

FIG. 5 is a block diagram illustrating an apparatus 500 configured to perform a method (referred to herein as FD scheduling method) for determining a frequency domain scheduling decision for a set of devices such as UEs. The apparatus 500 may belong to a wireless communication system, e.g., as shown in FIG. 1. The FD scheduling method illustrated and described in reference to FIG. 5 may provide an example implementation of the blocks 305 and 307 of FIG. 3.

The apparatus 500 may comprise a scheduler 501. The scheduler 501 may be referred to as a Proximal Policy Optimization (PPO) scheduler. The PPO scheduler 501 may comprise a policy-based reinforcement learning agent 503. The policy-based reinforcement learning agent 503 may, for example, comprise a policy and an actor network that facilitates the agent's training, with only the actor network being used during the inference phase. The environment of the policy-based reinforcement learning agent may be provided by the wireless communication system. As illustrated in FIG. 5, the policy-based reinforcement learning agent 503 may receive as input a feature vector 502. The feature vector 502 may comprise features of the set of UEs which are selected, e.g., by a TD scheduler. The feature vector 502 may provide a state for the policy-based reinforcement learning agent 503. The output of the policy-based reinforcement learning agent 503 may be represented as a matrix 504. The matrix 504 may enable a two-dimensional action space.

To obtain the matrix 504, the actual output layer of the actor network 503 is reshaped into two (2) dimensions. The matrix 504 has columns that represent the set of UEs respectively and has rows that represent a set of frequency resource units (e.g., RBGs) respectively. Each column may be associated with a UE index and each row may be associated with a RBG index. Each column of the matrix 504 may comprise probabilities of assignment of the set of frequency resource units of the column to the UE respectively. The PPO scheduler 501 may not need to loop over the RBGs and thus avoid triggering the actor network 503 multiple times depending on the available number of RBGs. This is enabled by providing the feature vector 502 as defined herein, and by enlarging the output layer of the actor network 503 to a size $d_{actor}$ so that the actor network 503 is called only once.

The PPO scheduler 501 may comprise a sampling unit 505. The sampling unit 505 may first apply a softmax($\cdot$) function over the columns to normalize the probabilities in each column, and then sample the scheduling decision for each RBG over the columns, which represent the UE indices. Hence, the policy-based approach may deliver the action (a distribution over the UEs) at the output of the actor network instead of an output neuron for each possible allocation of the $N_{RBG}$ resources to $N_{UEs}$ UEs.

Hence, the FD scheduling method may receive as input the feature vector 502 and provide as output the result of sampling over the columns of the matrix 504.

The feature vector 502 may be collected at each time unit, e.g., at each TTI, given the candidate set of UEs $s_t = \{s_{1,t}, s_{2,t} \dots, s_{m,t}\}$, where $m$ represents the maximum number of candidate UEs returned from the TD scheduler at the $t$-th TTI.

Additionally, the available RBG index is denoted as $r_t = \{r_{1,t}, r_{2,t} \dots, r_{n,t}\}$, where $n$ represents the total number of available RBG indices. The following features of the feature vector 502 are collected given $s_t$ and $r_t$. Therefore, the subscript of $t$ is removed for all the notations for the sake of brevity and in general, $i$ indicates the index of a valid RBG and $j$ refers to the index of a candidate UE. The feature vector 502 may comprise the following features which are collected per TTI.

The first feature (F1) may be a normalized past throughput ($l_j$) of the $j$-th UE. The normalized past throughput $l_j$ is

$$l_j = \frac{l'_j}{l_{max}}$$

given by , where $l_{max}$ is the stored maximum filtered throughput denote and $l'_j$ as the filtered throughput of the $j$-th UE.

The second feature (F2) may be normalized buffer status ($b_j$) of the $j$-th UE. The normalized buffer status $b_j$ may

$$b_j = \frac{q_{max} - q_j}{q_{max}}$$

be defined as follows: , where denotes the maximum packet size queued in the buffer and $q_j$ refers to the total packet size (physical data unit) queued in the buffer of the $j$-the UE.

The third feature (F3) may be a normalized CQI value ($o_{i,j}$) of the $j$-th UE and the $i$-th available resource block

$$o_{i,j} = \frac{10 \log(o'_{i,j})}{35}$$

group index. The normalized CQI value $o_{i,j}$ may be defined as follows: , where $o'_{i,j}$ denotes the reported CQI value for downlink scheduling or estimated channel quality for uplink scheduling.

The features F1, F2 and F3 may be used to define a feature vector that may be sufficient for scheduling of resources in accordance with an SU-MIMO technique. However, for a MU-MIMO technique, one or more of the following features F4 and F5 may be added to the feature vector.

The fourth feature (F4) may be a normalized additional sum of ranks ($k_{i,j,\zeta}$) from the $j$-th UE to the $i$-th available

$$k_{i,j,\zeta} = \frac{k'_{i,\zeta} + z_j}{k_{max}}$$

resource block group index. The normalized additional sum of ranks $k_{i,j,\zeta}$ may be defined as follows: , where $k'_{i,\zeta}$ may be the current sum of ranks from all the UEs that have been allocated to the $i$-th RBG at the $\zeta$-th user layer, $z_j$ represents the rank of the $j$-th UE and $k_{max}$ denotes a preset value for the maximum possible sum of ranks. The fifth feature (F5) may be a user correlation. The user correlation may comprise a correlation factor ($\varrho_{i,j}$) from the $j$-th candidate UE to the co-scheduled UEs for each RBG. The correlation factor $\varrho_{i,j}$ from the $i$-th UE to the $j$-th RBG may be evaluated depending on the scheduling being uplink scheduling or downlink scheduling.

In case of uplink scheduling, a semi-unitary matrix $U_{i,j}$ for the singular decomposition of the sounding reference signal's channel matrix for the $j$-th candidate UE at the $i$-th RBG may be provided. Similarly, $U_{i,c}$ denotes the singular decomposition of the sounding reference signal's channel matrix for the $c$-th co-scheduled UE at the $i$-th RBG. An individual correlation factor between the $j$-th UE to the $c$-th co-scheduled UE at the $i$-th RBG is calculated by

$$r_{i,j,c} = \max\left\{\Sigma_m \left|\left[U_{i,j}^H U_{i,c}\right]_{m,d}\right|, \text{for } d \in \{1,2,...,D\}\right\},$$

which refers to the maximum value of the absolute summation of the rows of the cross-correlation matrix, where $[\cdot]_{m,d}$ denotes to the element at the $m$-th row and $d$-th column. The correlation factor $\varrho_{i,j}$ may thus be defined as follows: $\varrho_{i,j} = \max\{r_{i,j}\}$ with

$$r_{i,j} = \left\{r_{i,j,1}, r_{i,j,2}, ..., r_{i,j,N_{i,\zeta}}\right\}$$

that has $N_{j,\zeta}$ represents the number of co-scheduled UEs at the $i$-th RBG of the $\zeta$-th user layer. In case of downlink scheduling, instead of using the channel matrix from the sounding reference signals as uplink scheduling, the precoder matrix from the $j$-th candidate UE and the $c$-th co-scheduled UE is collected and the individual correlation factor becomes

$$r_{i,j,c} = \max\left\{\Sigma_m \left|\left[P_{i,j}^H P_{i,c}\right]_{m,d}\right|,\right.$$

for $d \in \{1,2,...,D\}$, where $P_{i,j}$ and $P_{i,c}$ refer to the precoder matrix for the $j$-th candidate UE and $c$-th co-scheduled UE at the $i$-th RBG. $D$ denotes the number of columns of the precoder matrix. Similar to uplink scheduling, the correlation factor $\varrho_{i,j}$ may be defined as follows: $\varrho_{i,j} = \max\{r_{i,j}\}$ with $r_{i,j} = \{r_{i,j,1}, r_{i,j,2}, ..., r_{i,j,N_{i,\zeta}}\}$. For example, the two types of matrices $U_{i,j}$ and $P_{i,j}$ may be assumed to be available per subband. In that case, the maximum correlation value among all the RBGs between the $j$-th UE and the co-scheduled UEs in the RBGs is calculated.

Once evaluated, the values of the features F1, F2, F3, F4 and F5 may be concatenated into the feature vector 502. However, the feature vector design is flexible enough to be extended with additional features related to the RAN radio context if needed. For example, the number of features ($N_{\text{feature}}$) of the feature vector 502 may be preset to a certain value according to the maximum number of users and possible resource block groups, e.g., $N_{\text{feature}} = N_{CS2}(3N_{RBG} + 2)$. For the case when there are less available users or RBGs at a TTI, zero-paddings are applied. $N_{CS2}$ and $N_{RBG}$ are the CS2 size and maximum number of RBGs, respectively. The actor network 503 has an output layer of dimension $d_{\text{actor}} = N_{RBG}(N_{CS2} + 1)$. The additional 1 indicates that a null space is needed to allocate no users to a frequency resource such as a specific RBG, (e.g., the resource allocation for the specific RBG is skipped). In response to the actor network 503 providing the input state information to the output layer, whose output can be denoted as $\boldsymbol{y} \in \mathbb{R}^{N_{\text{RBG}}(N_{CS2}+1)}$, the output $\boldsymbol{y}$ is reshaped into a matrix form of $\boldsymbol{y'} \in \mathbb{R}^{N_{\text{RBG}} \times (N_{CS2}+1)}$. The softmax($\cdot$) function is applied over the columns so that $\sum_{j=1}^{N_{CS2}+1} y'_{i,j} = 1$ for any $i \in \{1,2,...,N_{\text{RBG}}\}$. Then, the scheduling decision for each RBG is sampled over the columns, which represent the UE index. $\omega_i \in \{1,2,...,N_{CS2}+1\}$ may denote the UE index to be allocated to the $i$-th RBG. Since the uplink and downlink scheduling may follow contiguous and non-contiguous allocations, respectively, given $\omega = \{\omega_1, \omega_2, ..., \omega_{NRBC}\}$, contiguous and non-contiguous resource allocation operations may be performed.

In one example, non-contiguous allocation may be based on the decisions $\omega$ that are sampled from the actor network, e.g., once the scheduling decisions are sampled and determined from the output layer of the actor network, the decided RBG may be allocated to the UE without checking whether the contiguous criterion is satisfied. When the $i$-th RBG is not valid at the current TTI, the sample $\omega_i$ is skipped. As another example, contiguous allocation may be executed in a top-to-bottom manner, such that to guarantee that a contiguous uplink allocation is achieved, the allocator loops over the RBGs from the top index to the bottom index and assigns the RBG to the UE in response to confirming that the contiguous criterion is satisfied.

FIG. 6 is a diagram illustrating an apparatus 600 configured to perform a method for determining a frequency domain scheduling decision for a set of devices such as UEs in a MU-MIMO configuration. The FD scheduling method as described with reference to FIG. 5 may be repeated sequentially per MU-MIMO user layer. The MU-MIMO user layer may be the user layer. For that, the apparatus 600 may comprise the PPO scheduler 501 of FIG. 5 to perform the FD scheduling method per MU-MIMO user layer.

For example, if the number of MU-MIMO user layers is $N_{MIMO}$, the FD scheduling method may be repeated a number $N_{MIMO}$ of times. For each MU-MIMO user layer, the state 602 of the agent within the environment may be updated by providing an update of the feature vector which is used by the FD scheduling method to provide the RBG allocation.

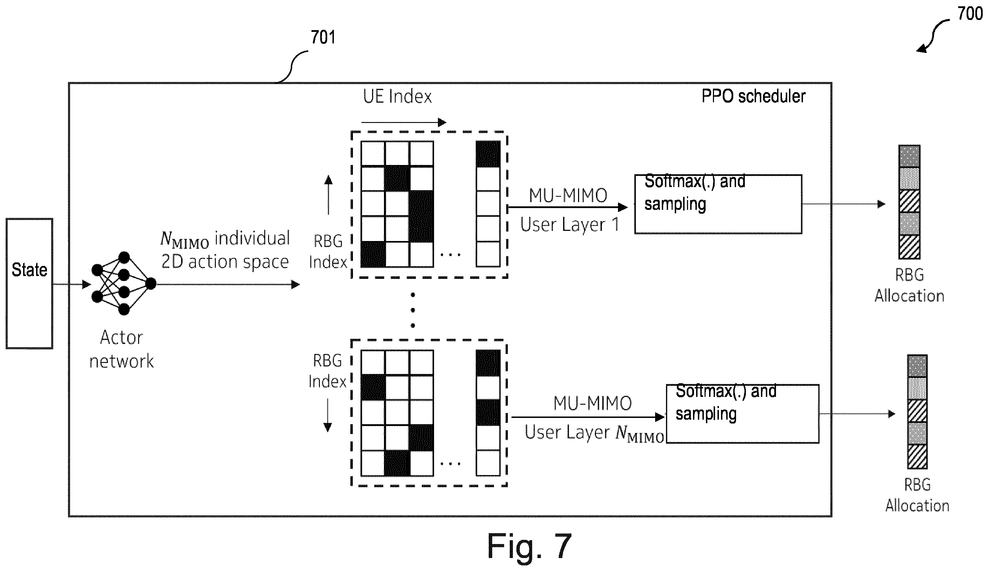

FIG. 7 is a diagram illustrating an apparatus 700 configured to perform a method for determining a frequency domain scheduling decision for a set of devices such as UEs in a MU-MIMO configuration. The method of FIG. 7 is an alternative to the method of FIG. 6.

The apparatus 700 comprises a PPO scheduler 701. The PPO scheduler may enable FD scheduling and special domain (SD) scheduling. This may enable to achieve a pure loop-free scheduling over both FD and SD. As illustrated in FIG. 7, for $N_{MIMO}$ MU-MIMO user layers, the two-dimensional action space is expanded by $N_{MIMO}$ times where each MU-MIMO user layer occupies $N_{RBG}$ rows of the two-dimensional action space, $y \in \mathbb{R}^{N_{MIMO} N_{RBG}(N_{CS2}+1)}$ and $y' \in \mathbb{R}^{N_{MIMO} N_{RBG} \times (N_{CS2}+1)}$.

The operations for applying softmax($\cdot$) function and sampling may be the same or similar to those described with reference to FIG. 6. During resource allocation, there may be a condition check to ensure that the sampled frequency resource unit (e.g., RBG) is valid for a device. This condition check filters out the invalid devices.

For the SD and FD loop-free scheduling, since the scheduling decisions may need to be made without recalling the actor and critic networks, those features of the feature vector with the sum of ranks may be removed. Additionally, the feature with the user correlation may be adjusted to a vector with all the combinations of valid candidates, which means $\mathscr{r}_{i,j,c}$ is recorded as a feature element for $i \in \{1,2, \dots, N_{CS2}\}$, $j \in \{2,3, \dots, N_{CS2}|i \neq j\}$ and $c \in \{1,2, \dots, N_{RBG}\}$.

As a result, the SD and FD loop-free scheduler may not need to loop over the MU-MIMO user layers nor updating the features after each iteration over the spatial layers, as the scheduling decision for each layer has been determined by calling the actor network once.

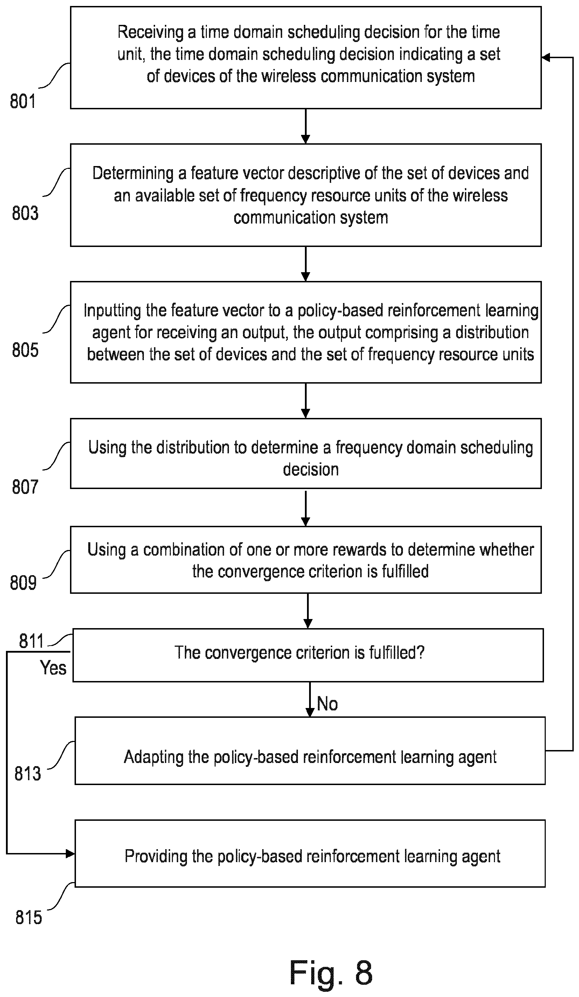

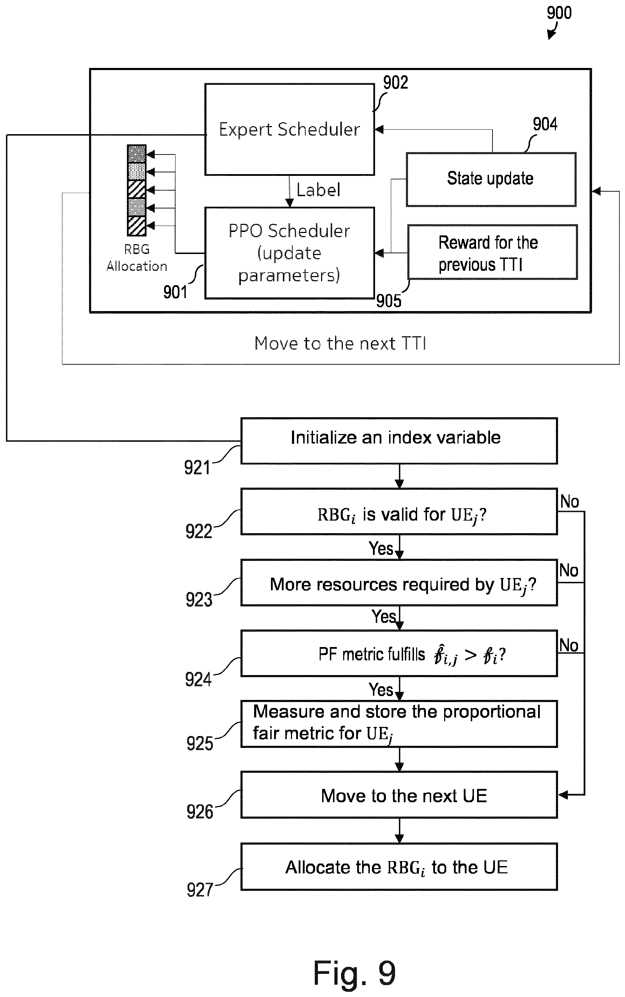

FIG. 8 is a process flowchart illustrating a method for training a policy-based reinforcement learning agent with an environment defined by a wireless communication system. One or more operations illustrated and described in reference to FIG. 8 may be performed by an apparatus, such as, for example, an apparatus 900 comprising a PPO scheduler 901 illustrated and described in reference to FIG. 9, but is not limited to this implementation.

A time domain scheduling decision for the training time unit may be received in step 801. The time domain scheduling decision indicates a set of devices.

A feature vector may be determined in block 803. The feature vector is descriptive of the set of devices and an available set of frequency resource units of the wireless communication system.

The feature vector may be input in block 805 to the policy-based reinforcement learning agent for receiving an output. The output comprises a distribution between the set of devices and the set of frequency resource units.

The distribution may be used in block 807 to determine a frequency domain scheduling decision.

A convergence criterion may be checked in block 809 by at least using a combination of one or more rewards to determine whether the convergence criterion is fulfilled. The combination comprises a current reward associated with the determined frequency domain scheduling decision.

In response to determining (at block 811) that the convergence criterion is fulfilled, the trained policy-based reinforcement learning agent may be provided in block 815. In response to determining (at block 811) that the convergence criterion is not fulfilled, the policy-based reinforcement learning agent may be adapted in block 813 and the scheduling operation may be repeated for a next training time unit using the adapted policy-based reinforcement learning agent. The adaptation of the policy-based reinforcement learning agent may, for example, be performed by adjusting learnable parameters of the policy-based reinforcement learning agent. The learnable parameters of the policy-based reinforcement learning agent may be parameters of the policy-based reinforcement learning agent. The parameters may be variables that are learned from the training data. In case of a neural networkbased agent, the parameters may, for example, include weights and biases. The learnable parameters may, for example, be adjusted based on the gradients computed during backpropagation to optimize a loss function.

In one example implementation of FIG. 8, the convergence criterion may be checked in each iteration. Alternatively, the convergence criterion may be checked on a periodic basis, e.g., every specific number of time units or as soon as a buffer that stores rewards and other information required for checking the convergence criterion is full. After the checking of the convergence criterion the buffer may be emptied.

FIG. 9 is a diagram illustrating an apparatus 900 for training a policy-based reinforcement learning agent with an environment defined by a wireless communication system.

The apparatus 900 comprises a PPO scheduler 901. The PPO scheduler 901 may comprise the PPO scheduler 501 or 701 which is described with reference to FIG. 5 and FIG. 7 respectively. The apparatus 900 may further comprise a critic network (not shown) for training the actor network.

If the actor network learns from scratch (with random trainable parameters initialized and the parameters are updated following a PPO scheme), the training speed may be slow, and it might easily converge to a local optimal policy that gives a poor scheduling performance. To overcome this issue, an expert scheduler 902 may be used to guide the PPO scheduler 901. The expert scheduler 902 may be any heuristic scheduler depending on the system's requirements. The expert scheduler 902 may be configured to generate a label indicative of a scheduling decision for the PPO scheduler to learn from.

With the motivation of introducing MU-MIMO gain to the PPO scheduler, a simple MU-MIMO user pairing strategy could greedily compute the PF metric among the UE candidates and choose the UE with the highest metric. Starting from the first available RBG ($RBG_{i=1}$) and UE candidate ($UE_{j=1}$), the expert scheduler 902, as illustrated in FIG. 9, at block 921 initializes an index variable $\ell$ = ø, where ø represents the null space. The expert scheduler 902 at block 922 checks whether $RBG_i$ is valid for $UE_j$. If $RBG_i$ for $UE_j$ is not valid, the expert scheduler 902 proceeds to block 926; otherwise, the expert scheduler 902 proceeds to block 923.

The expert scheduler 902 checks at block 923 if there are more resources required by $UE_j$. If there are no more resources required by $UE_j$, the expert scheduler 902 proceeds to block 926; otherwise, the expert scheduler 902 proceeds to block 924. At block 924, the expert scheduler 902 checks if there is a MU-MIMO gain compared to the stored metric ($\hat{\mathscr{f}}_i$) for $RBG_i$. For that, a summation ($\hat{\mathscr{f}}_{i,j}$) of PF metrics is computed, assuming that $UE_j$ is allocated to $RBG_i$, as follows:

$$\hat{\mathscr{f}}_{i,j} = \sum_c \frac{t_c}{\overline{t}_c}$$

, where $t_c$ and $\overline{t}_c$ refer to the predicted and filtered averaged throughputs for the $c$-th co-scheduled UE in $RBG_i$, respectively. If the computed summation is higher than the stored metric (e.g., $\hat{\mathscr{f}}_{i,j} > \mathscr{f}_i$), the expert scheduler 902 proceeds to block 925; otherwise, the expert scheduler 902 proceeds to block 926.

The expert scheduler 902 at block 925 may measure and store the proportional fair metric ($\hat{\sigma}_j$) for $UE_j$:

$$\hat{\sigma}_j = \frac{t_j}{\overline{t}_j}.$$

. If the proportional fair metric is higher than a threshold ($\sigma$), $\hat{\sigma}_j > \sigma$, the index of the UE may be stored in the index variable, $\ell \leftarrow j$. This may result in overwriting an existing index in the index variable $\ell$. The threshold σ may, for example, be dynamically determined as the proportional fair metric of the UE whose index is currently stored in the index variable $\ell$. The expert scheduler 902 at block 926 may move to the next UE having the next index $j + 1$: $j \leftarrow j + 1$, and go back to block 922. If all the UEs have been considered, the expert scheduler 902 proceeds to block 927.

The expert scheduler 902 may allocate at block 927 $RBG_i$ to the UE with the largest proportional fair metric. If the index variable is the null space, $\ell$ = ø, this indicates that there is no UE to be allocated to $RBG_i$. The stored metric may be updated for $RBG_i$ with the summation $\hat{\mathscr{f}}_{i,\ell}$ associated with the UE being in the index variable, e.g., $\mathscr{f}_i \leftarrow \hat{\mathscr{f}}_{i,\ell}$, so that the next RBG, $i \leftarrow i + 1$ may be processed as described throughout the present disclosure with reference to $RBG_i$.

To train the actor and critic networks, a loss function may be used. Once the loss function is optimized, the resulting trained actor network may be provided.

During the training, in each iteration, the PPO scheduler 901 may receive the feature vector 904 representing the current state of the environment for the current TTI and reward 905 for the previous TTI. The PPO scheduler 901 may further receive the label from the expert scheduler 902 for the same current state. The PPO scheduler 901 may be configured to determine the frequency domain scheduling decision as described throughout the present disclosure, e.g., using the FD scheduling method. The scheduling decision and the label as well as the reward(s) may be used to evaluate the loss function. If the loss function fulfills the convergence criterion, the actor network may be provided; otherwise, a next iteration of the training may be performed for a next TTI.

For example, the reward 905 may be computed at the start of a new TTI. During the loop of the spatial domain, zero is used as the reward to save an experience into the PPO experience buffer for any secondary MU-MIMO user layer.

During the training, the state, reward, actions, and the scheduling decisions from the expert scheduler 902 may be saved into a fix-sized buffer at each TTI. Once the buffer is full, the loss function is computed, and the gradients are propagated back to the actor and critic networks to update the trainable parameters. During the test phase, all trainable parameters can be frozen and only the actor network may need to be called to obtain the scheduling decisions.

The loss function $\mathcal{L}$ may be defined as provided in Equation (1)

$$\mathcal{L} = (1 - \beta_t)\left[0.5\mathbb{E}\left\{\left(V(s_t) - \hat{R}_t\right)^2\right\} - \mathbb{E}\left\{\min\left(\kappa_t(\theta)\hat{A}_t,\ \text{clip}(\kappa_t(\theta),\ 1 - \epsilon,\ 1 + \epsilon)\hat{A}_t\right)\right\} - \zeta H(a_t|s_t; \pi^{PPO})\right] + \beta_t f_{JSD}(\pi_{\theta_{PPO}}, \pi_{\text{expert}}),$$

$$(1)$$

where $\beta_t$ is indicative of a factor that adjusts the balance between imitation and conventional PPO losses, $\zeta$ is indicative of the coefficient that controls the entropy regularization term for exploration, $H(\cdot)$ is indicative of the entropy value of learned policy, $\hat{A}_t$ is indicative of the advantage value, which can be calculated from a generalized advantage estimator, $\kappa_t(\cdot) = \dfrac{\pi_{\theta_{PPO}}}{\pi_{\theta'_{PPO}}}$ is indicative of the ratio of the change from the updated to the old policies, $\varepsilon$ is indicative of the clipping value to control the update of new policy to the old policy, $V(\cdot)$ is indicative of the estimated value, by the critic network, from the value function, $\hat{R}_t$ is indicative of the target return computed from the stored rewards, $f_{JSD}(\cdot)$ is indicative of the Jensen-Shannon divergence function that measures the distance between the decisions made from the expert and PPO-based schedulers, $\pi_{\theta PPO}$ is indicative of the PPO scheduler decision, and $\pi_{\text{expert}}$ is indicative of the expert's scheduling decision. Note that since the action space is considered as two-dimensional, the actual policy may be indicated by $\pi_{\theta_{PPO}} = \prod_{i=1}^{N_{RBG}} \pi_{\theta_{PPO,i}}$, where $\pi_{\theta PPO,i}$ refers to the policy of the $i$-th RBG.

The target return may, for example, be an example of the combination of one or more rewards. The term in the loss function which includes $(1 - \beta_t)$ may be an example of the first term of the loss function and the term in the loss function which includes $\beta_t f_{JSD}$ may be an example of the second term of the loss function.

The reward function may give a measure on the geometric mean of the user throughput and the PPO-based scheduler learns to maximize the total return so that the geometric mean of user throughput can be optimized. For example, the geometric mean of user throughputs may be the objective metric of FD and SD scheduler. Therefore, $g_{j,t+1}$ may be denoted as the newly received packet size reported from the $j$-th UE in the network at the $(t + 1)$-th TTI. The reward to be saved in the experience buffer is defined as the change of geometric mean of user throughputs from the $(t + 1)$-th TTI to the t-th TTI:

$$\kappa_{t+1} = \left(\prod_{j=1}^{N'_{UE}} g_{j,t+1}\right)^{\frac{1}{N'_{UE}}} - \left(\prod_{j=1}^{N'_{UE}} g_{j,t}\right)^{\frac{1}{N'_{UE}}}$$

, where $N'_{UE}$ refers to the total number of UEs in the network.

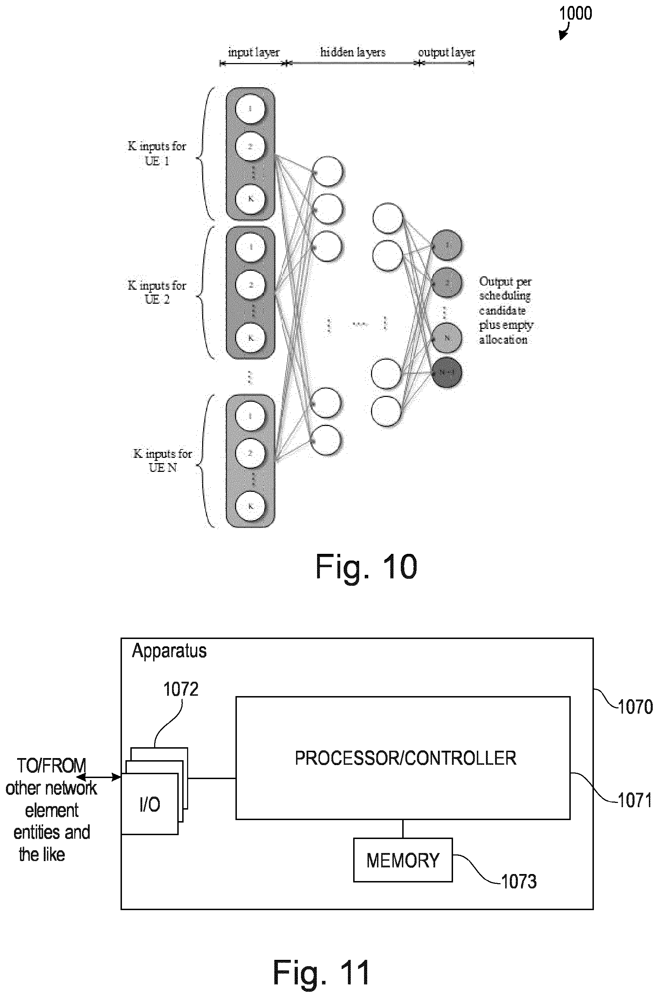

FIG. 10 is a diagram illustrating an example policy-based reinforcement learning agent configured to perform a method for training the policy-based reinforcement learning agent in accordance with an example of the present subject matter. The policy-based reinforcement learning agent is a neural network 1000. The method illustrated in FIG. 10 describes a method for creating the feature vector and inputting the feature vector to the neural network 1000 during the training. The number of features as illustrated in FIG. 10 is K, while the maximum number of UEs is N for a current time unit.

The feature vector may comprise for each UE a respective input block that comprises the values of the K features for the UE. To avoid biases in training when the number of UEs is lower than N, this method may mask the unused UE inputs, and shuffle the UE input blocks. The outputs are then matched to the shuffled input blocks. Specifically, the input blocks are shuffled per UE for maximum number of N supported UEs illustrated in FIG. 10. For example, the order of the K features within each UE input block shall not be shuffled, as this may invalidate the inputs.

In addition to bias reduction, it was also observed that reinforcement algorithms without self-controlled entropy (such as vanilla Deep Q-Network (DQN) or Double DQN (DDQN)) may not require extensive handmade exploration strategies, because UE input block shuffling suffices. One way to implement this example is that ML-based scheduler may start filling UE input blocks in random order. Inputs per block may always be filled in the same order. The last blocks are filled with zero padding, but because of random filling order, also those zero padded blocks will be in random places within the input vector.

In FIG. 11, a block circuit diagram illustrating a configuration of an apparatus 1070 is shown, wherein the apparatus 1070 is configured to implement at least part of the present subject matter. It is to be noted that the apparatus 1070 illustrated in FIG. 11 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements.

Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 3, 4 or 8.

For example, the processor 1071 is configured for: performing for a time unit a scheduling operation comprising: receiving a time domain scheduling decision for the time unit, the time domain scheduling decision indicating a set of devices of the wireless communication system; determining a feature vector descriptive of the set of devices and an available set of frequency resource units of the wireless communication system; inputting the feature vector to a policy-based reinforcement learning agent for receiving an output, the output comprising a distribution between the set of devices and the set of frequency resource units; using the distribution to determine a frequency domain scheduling decision.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. An apparatus for a wireless communication system, the apparatus comprising at least one processor; and at least one memory storing instructions that, when executed by the at least one processor, cause the apparatus to perform for a time unit a scheduling operation that comprises:

   receive (301) a time domain scheduling decision for the time unit, the time domain scheduling decision indicating a set of devices of the wireless communication system;
   determine (303) a feature vector descriptive of the set of devices and an available set of frequency resource units of the wireless communication system;
   input (305) the feature vector to a policy-based reinforcement learning agent for receiving an output, the output comprising a distribution between the set of devices and the set of frequency resource units; and
   use (307) the distribution to determine a frequency domain scheduling decision, wherein the policy-based reinforcement learning agent is a stochastic policy-based reinforcement learning agent, wherein the distribution comprises a probability distribution per frequency resource unit of the set of frequency resource units, the probability distribution of each frequency resource unit indicating probabilities of assignment of the frequency resource unit to the set of devices, wherein execution of the instructions further causes the apparatus to determine the frequency domain scheduling decision by at least: sample the probability distributions for obtaining allocations indicating assignments of the set of frequency resource units to devices of the set of devices.

2. The apparatus of claim 1, wherein execution of the instructions further causes the apparatus to perform the scheduling operation in accordance with a single-user multiple input, multiple output (SU-MIMO) technique, wherein the frequency domain scheduling decision is determined independent of user layers representing ranks assigned to the set of devices.

3. The apparatus of claim 1, wherein execution of the instructions further causes the apparatus to perform the scheduling operation in accordance with a SU-MIMO technique or multi-user multiple input, multiple output (MU-MIMO) technique, wherein the apparatus is further caused to determine a frequency domain scheduling decision per user layer by at least repeat per user layer the determining of the feature vector, the inputting of the feature vector and the determining of the frequency domain scheduling decision, resulting in a frequency domain scheduling decision per user layer.

4. The apparatus of claim 1, execution of the instructions further causes the apparatus to perform the scheduling operation in accordance with a MU-MIMO technique, wherein the feature vector is determined such that the distribution comprises one individual distribution per user layer, wherein the individual distribution is between the set of devices and the set of frequency resource units, wherein the frequency domain scheduling decision comprises one individual frequency domain scheduling decision per user layer.

5. The apparatus of any of the preceding claims, wherein the frequency domain scheduling decision is determined so that to each scheduled device of the set of devices contiguous frequency resource units are assigned for uplink transmissions.

6. The apparatus of any of the preceding claims, wherein the policy-based reinforcement learning agent comprises a neural network, the neural network comprises an output layer whose dimension is equal to the number of the set of frequency resource units multiplied by the number of the set of devices plus one.

7. The apparatus of claim 6, wherein execution of the instructions further causes the apparatus to map the output layer into a two-dimensional matrix whose columns represent the set of devices and rows represent the set of frequency resource units, wherein the sampling is performed column-wise using the matrix.

8. The apparatus of any of the preceding claims, the feature vector comprising values of features, the features comprising for each device of the set of devices a device related feature, the features further comprising per device and per frequency resource unit a channel related feature, wherein the device related feature comprises at least one of: a buffer status of the device or a past throughput of the device, wherein the channel related feature of a device and a frequency resource unit comprises at least: a channel quality indicator (CQI) of a frequency channel to the device which is defined by the frequency resource unit.

9. The apparatus of claim 8, the features further comprising per device of the set of devices a correlation feature in case the scheduling operation is performed for a MU-MIMO technique, wherein the correlation feature of the device comprises at least one of: a correlation between the device and other devices of the set of devices, or a sum of ranks from the device to the set of frequency resource units.

10. The apparatus of any of the preceding claims, wherein the feature vector is of a predefined size, wherein the size is preset to a certain value according to a maximum number of devices and a maximum number of frequency resource units, wherein the determining of the feature vector comprises applying zero-paddings in case the number of the set of devices and/or the number of the set of frequency resource units is smaller than the respective maximum number.

11. A method for performing for a time unit a scheduling operation comprising:

   receiving (301) a time domain scheduling decision for the time unit, the time domain scheduling decision indicating a set of devices of a wireless communication system;
   determining (303) a feature vector descriptive of the set of devices and an available set of frequency resource units of the wireless communication system;
   inputting (305) the feature vector to a policy-based reinforcement learning agent for receiving an output, the output comprising a distribution between the set of devices and the set of frequency resource units; and
   using (307) the distribution to determine a frequency domain scheduling decision.

12. A computer program product comprising processor executable instructions for causing an apparatus for performing the method of claim 11.

13. An apparatus for training a policy-based reinforcement learning agent with an environment defined by a wireless communication system, the apparatus comprising at least one processor; and at least one memory storing instructions that, when executed by the at least one processor, cause the apparatus to perform a scheduling operation per training time unit of a plurality of training time units that comprises:

   receive (801) a time domain scheduling decision for the training time unit, the time domain scheduling decision indicating a set of devices;
   determine (803) a feature vector descriptive of the set of devices and an available set of frequency resource units of the wireless communication system;
   input (805) the feature vector to the policy-based reinforcement learning agent for receiving an output, the output comprising a distribution between the set of devices and the set of frequency resource units;
   use (807) the distribution to determine a frequency domain scheduling decision; and
   check a convergence criterion by at least:

      use (809) a combination of one or more rewards to determine whether the convergence criterion is fulfilled, the combination comprising a current reward associated with the determined frequency domain scheduling decision;
      in response to determining (811) that the convergence criterion is fulfilled provide (815) the policy-based reinforcement learning agent as a trained policy-based reinforcement learning agent; otherwise, adapt (813) learnable parameters of the policy-based reinforcement learning agent, resulting in an adapted policy-based reinforcement learning agent and performing the scheduling operation for a next training time unit using the adapted policy-based reinforcement learning agent.

14. The apparatus of claim 13, the policy-based reinforcement learning agent comprising an actor network and a critic network, wherein the training is performed in accordance with an actor and critic configuration to train the actor network, wherein the provided trained policy-based reinforcement learning agent is the trained actor network.

15. The apparatus of any of the preceding claims 13 to 14, wherein the training is performed to concurrently optimize the combination of rewards and optimize a performance difference between the determined frequency domain scheduling decisions and corresponding reference scheduling decisions provided by an expert scheduler, wherein the convergence criterion requires an optimized combination or rewards and an optimized performance difference.

Fig. 1

Fig. 2

Receiving a time domain scheduling decision for the time unit, the time domain scheduling decision indicating a set of devices of the wireless communication system

301

Determining a feature vector descriptive of the set of devices and an available set of frequency resource units of the wireless communication system

303

Inputting the feature vector to a policy-based reinforcement learning agent for receiving an output, the output comprising a distribution between the set of devices and the set of frequency resource units

305

Using the distribution to determine a frequency domain scheduling decision

307

Fig. 3

Determining a time domain scheduling decision for the time
unit, the time domain scheduling decision indicating a set
of devices of the wireless communication system

401

Determining a feature vector descriptive of the set of devices and
an available set of frequency resource units of the wireless
communication system

403

Inputting the feature vector to a policy-based reinforcement learning
agent for receiving an output, the output comprising a distribution
between the set of devices and the set of frequency resource units

405

Using the distribution to determine a frequency domain scheduling
decision

407

Fig. 4

500

501

502

503

UE Index   504   PPO scheduler

505

2D action space

State

Actor network

RBG Index

Softmax(.) and sampling

Find the probability distribution of UE indices over each RBG

RBG Allocation

## Fig. 5

600

602   501

update state

PPO scheduler

MU-MIMO
User Layer 1

MU-MIMO
User Layer 2

## Fig. 6

Fig. 7

801 — Receiving a time domain scheduling decision for the time unit, the time domain scheduling decision indicating a set of devices of the wireless communication system

803 — Determining a feature vector descriptive of the set of devices and an available set of frequency resource units of the wireless communication system

805 — Inputting the feature vector to a policy-based reinforcement learning agent for receiving an output, the output comprising a distribution between the set of devices and the set of frequency resource units

807 — Using the distribution to determine a frequency domain scheduling decision

809 — Using a combination of one or more rewards to determine whether the convergence criterion is fulfilled

811 — The convergence criterion is fulfilled?

Yes

No

813 — Adapting the policy-based reinforcement learning agent

815 — Providing the policy-based reinforcement learning agent

Fig. 8

900

902

Expert Scheduler

904

State update

| Label

PPO Scheduler
(update
parameters)

RBG
Allocation

901

905

Reward for the
previous TTI

Move to the next TTI

Initialize an index variable

921

922        RBG$_i$ is valid for UE$_j$?                    No

Yes

923        More resources required by UE$_j$?            No

Yes

924        PF metric fulfills $\hat{f}_{i,j} > f_i$?      No

Yes

925    Measure and store the proportional
       fair metric for UE$_j$

926        Move to the next UE

927        Allocate the RBG$_i$ to the UE

Fig. 9

1000

input layer    hidden layers    output layer

K inputs for UE 1

K inputs for UE 2

K inputs for UE N

Output per scheduling candidate plus empty allocation

## Fig. 10

Apparatus

1072

TO/FROM other network element entities and the like

I/O

PROCESSOR/CONTROLLER

1070

1071

MEMORY

1073

## Fig. 11

Europäisches
Patentamt

European
Patent Office

Office européen
des brevets

# EUROPEAN SEARCH REPORT

**Application Number**

EP 25 19 1722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VALCARCE ALVARO ET AL: "The Role of AI in 6G MAC", 2024 JOINT EUROPEAN CONFERENCE ON NETWORKS AND COMMUNICATIONS & 6G SUMMIT (EUCNC/6G SUMMIT), IEEE, 3 June 2024 (2024-06-03), pages 723-728, XP034645322, DOI: 10.1109/EUCNC/6GSUMMIT60053.2024.10597082 [retrieved on 2024-07-19] | 11,12 | INV. H04W72/0453 |
| Y | * page 1 * | 13-15 | |
| A | | 1-10 | |
| Y | GUO XIAOJUN ET AL: "A Novel User Selection Massive MIMO Scheduling Algorithm via Real Time DDPG", GLOBECOM 2020 - 2020 IEEE GLOBAL COMMUNICATIONS CONFERENCE, IEEE, 7 December 2020 (2020-12-07), pages 1-6, XP033882326, DOI: 10.1109/GLOBECOM42002.2020.9322383 [retrieved on 2021-01-13] | 13-15 | |
| A | * page 3 * | 1-10 | TECHNICAL FIELDS SEARCHED (IPC)<br><br>H04W |
| X | US 2021/329668 A1 (SINGH SHEKHAWAT JITENDER [IN] ET AL) 21 October 2021 (2021-10-21) | 11,12 | |
| A | * paragraph [0099] - paragraph [0114]; figure 5 * | 1-10, 13-15 | |

-/--

The present search report has been drawn up for all claims

| Place of search | Date of completion of the search | Examiner |
|---|---|---|
| Munich | 10 November 2025 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 19 1722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG NING ET AL: "Beyond the Edge: An Advanced Exploration of Reinforcement Learning for Mobile Edge Computing, Its Applications, and Future Research Trajectories", IEEE COMMUNICATIONS SURVEYS & TUTORIALS, IEEE, vol. 27, no. 1, 31 May 2024 (2024-05-31), pages 546-594, XP011998664, DOI: 10.1109/COMST.2024.3405075 [retrieved on 2024-05-31] * abstract * ----- | 1-10 | |
| A | US 2024/086715 A1 (SANDBERG DAVID [SE] ET AL) 14 March 2024 (2024-03-14) * paragraph [0209]; figures 14, 15 * ----- | 1-10 | |
| A | ZHANG SIYA ET AL: "Dynamic Resource Allocation for Multibeam Satellite Communication Systems", IEEE INTERNET OF THINGS JOURNAL, IEEE, vol. 11, no. 22, 23 July 2024 (2024-07-23), pages 36907-36921, XP011988554, DOI: 10.1109/JIOT.2024.3433022 [retrieved on 2024-07-24] * Equation (56); page 9 * ----- | 1-10 | **TECHNICAL FIELDS SEARCHED (IPC)** |

| The present search report has been drawn up for all claims | | |
|---|---|---|
| Place of search | Date of completion of the search | Examiner |
| Munich | 10 November 2025 | Tessier, Serge |

EPO FORM 1503 03.82 (P04C01)

page 2 of 2

## ANNEX TO THE EUROPEAN SEARCH REPORT
## ON EUROPEAN PATENT APPLICATION NO.

EP 25 19 1722

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2025

| Patent document cited in search report | Publication date | Patent family member(s) | Publication date |
|---|---|---|---|
| US 2021329668 A1 | 21-10-2021 | US 2021329668 A1<br>WO 2021210810 A1 | 21-10-2021<br>21-10-2021 |
| US 2024086715 A1 | 14-03-2024 | US 2024086715 A1<br>WO 2022161599 A1 | 14-03-2024<br>04-08-2022 |

EPO FORM P0459

For more details about this annex : see Official Journal of the European Patent Office, No. 12/82